# EUROPEAN PATENT SPECIFICATION

(11) **EP 2 075 169 B1**
(45) Date of publication and mention of the grant of the patent: **10.09.2014**
(21) Application number: 08254053.5
(22) Date of filing: 18.12.2008
(51) Int. Cl.: B60T 8/32, B60T 8/26, B62L 3/08

(54) **Braking apparatus and straddle-type vehicle provided therewith**
Bremsvorrichtung und damit versehenes Grätschsitz-Fahrzeug
Appareil de freinage et véhicule de type à enfourcher fourni avec celui-ci

(30) Priority: 27.12.2007 JP 2007337427
(43) Date of publication of application: 01.07.2009
(73) Proprietor: Yamaha Hatsudoki Kabushiki Kaisha, SHIZUOKA-KEN 438-8501 (JP)
(72) Inventor: Seto, Hiroaki, Iwata-shi Shizuoka-ken 438-8501 (JP)
(74) Representative: Zimmermann, Tankred Klaus

(56) References cited:
- EP-A2- 1 277 635
- EP-A2- 2 090 482
- WO-A1-2008/050744
- WO-A1-2009/051008

## Description

### Technical Field

The present invention relates to a braking apparatus provided with a front wheel braking mechanism and a rear wheel braking mechanism which are independent of each other, and an assist mechanism assisting braking actions caused by the braking mechanisms, and a straddle-type vehicle provided with the braking apparatus.

### Background Art

As a straddle-type vehicle which has a seat and is driven by a rider with the seat straddled by the rider, there has been a straddle-type vehicle provided with a front wheel braking mechanism and a rear wheel braking mechanism which are independent of each other, and an assist mechanism assisting braking actions caused by these braking mechanisms. Conventional examples of the assist mechanisms of the kind include an assist mechanism constituted so that a front wheel is also braked by supplying predetermined braking auxiliary power to a front wheel braking mechanism when a rear wheel braking mechanism brakes a rear wheel (for example, see Japanese Patent Application Laid-Open No. 2000-6779).

However, since braking force applies also to the front wheel from the assist mechanism when the rear wheel braking mechanism brakes the rear wheel in the case of the conventional apparatus, a liquid pressure in a hydraulic passage of the front wheel braking mechanism is high. The pressure in the hydraulic passage is high as described above when the rider grips a front operating lever to further strengthen the front wheel braking force in this state. Unfortunately, the actuation of the operating lever, therefore, is hard and an operation feeling thereof is poor. Therefore, the improvement of the operation feeling in such a case is requested.

EP 1 277 635 A2 discloses a brake control method for a motorcycle which includes a front master cylinder, front wheel cylinders hydraulically connectable to the front master cylinder, a rear master cylinder, a rear wheel cylinder means hydraulically connectable to the rear master cylinder and a hydraulic pressure pump, wherein when only the front master cylinder is operated, brake pressure fluid is supplied to the front wheel cylinders, the fluid pressure pump is driven to supply discharging pressure fluid to the rear wheel cylinder means and, when only the rear master cylinder is operated, brake pressure fluid is supplied only to the rear wheel cylinder means.

The present invention has been made in view of the above conventional situation. It is an object of the present invention to provide a braking apparatus capable of improving an operation feeling of an operating member in operating the operating member of which braking action is assisted by an assist mechanism, and a straddle-type vehicle provided with the braking apparatus.

The invention provides a braking apparatus according to claim 1.

According to the present invention, the first braking mechanism actuated only when the operating member is operated, and the second braking mechanism actuated only when the operating member is operated in a case where no assist action is performed, and actuated by the assist action in a case where the assist action is performed are provided. Thereby, when the assist action is performed, only the liquid pressure of the second braking mechanism is high. Therefore, since the assist action for the first braking mechanism is not performed even when the assist action is performed, the liquid pressure of the first braking mechanism is low. As a result, the hardness of the actuation of the operating member is suppressed, and operation feeling can be improved.

### Brief Description of the Drawings

Embodiments of the invention are described hereinafter with reference to the accompanying drawings.
Fig. 1 illustrates a left side view of a motorcycle provided with a braking apparatus useful to understand the invention.
Fig. 2 illustrates a circuit constitution of the braking apparatus.
Fig. 3 illustrates a circuit constitution of the braking apparatus.
Fig. 4 illustrates a circuit constitution of the braking apparatus.
Fig. 5 illustrates a characteristic chart for explaining the effect of the braking apparatus.
Fig. 6 illustrates a circuit constitution of modification example of the braking apparatus.
Fig. 7 illustrates a circuit constitution of an embodiment of the braking apparatus according to the invention.

### Detailed Description

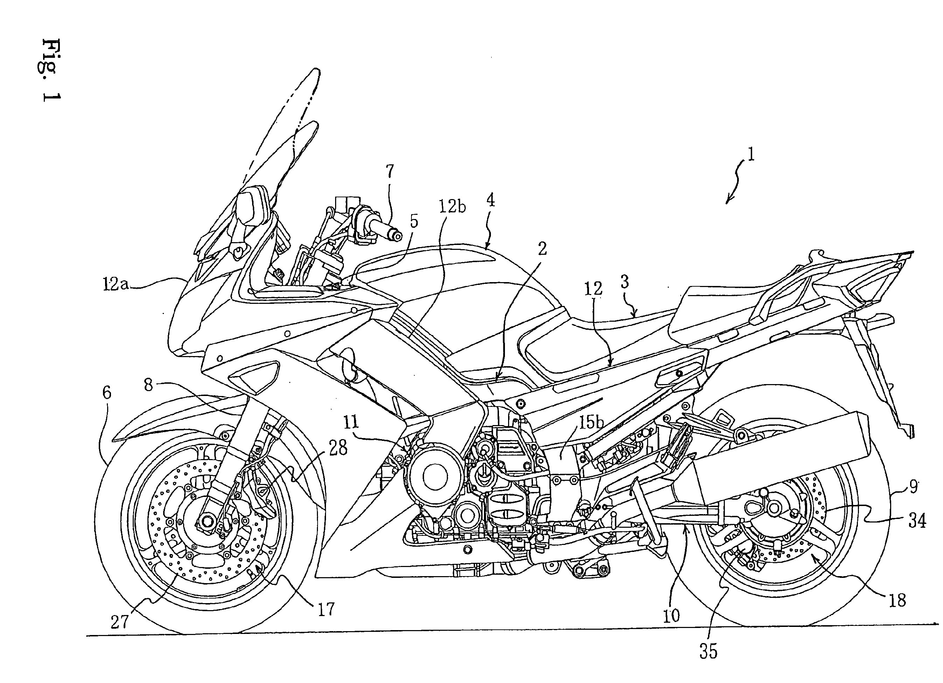

Hereinafter, an embodiment of the present invention will be described with reference to accompanying drawings. Figs. 1 to 5 are diagrams for explaining a braking apparatus useful in understanding the invention.

In the drawings, numeral number 1 designates a motorcycle provided with a braking apparatus, and the motorcycle 1 has the following schematic structure. A front fork 8 is steerably supported to the left and right by a head pipe 5 of a front end part of a vehicle body frame 2. The front fork 8 has a lower end part pivotally supporting a front wheel 6 and an upper end part to which a handlebar 7 is fixed. An engine unit 11 is mounted on a main frame part of the vehicle body frame 2. A rear arm 10 is supported so as to be capable of rocking upward and downward by a rear arm bracket 15b. The rear arm 10 has a rear end part supporting a rear wheel 9. Furthermore, a fuel tank 4 is mounted above the engine unit 11, and a seat 3 is mounted to the rear of the fuel tank 4. Numeral number 12 designates a vehicle body cover. The vehicle body cover 12 has a front cover 12a covering an area forward of the handlebar 7 and a side cover 12b covering a lower part of the seat from the side of an engine.

The above motorcycle 1 is provided with a braking apparatus 16 braking the front wheel 6 and the rear wheel 9. This braking apparatus 16 includes a front wheel braking mechanism 17 and a rear wheel braking mechanism 18 which are constituted to be able to be independently actuated with each other. The braking apparatus 16 further includes an ABS mechanism 19 avoiding the front wheel 6 and the rear wheel 9 from being locked. This ABS mechanism 19 is used both as a part of a front wheel assist mechanism 19a supplying auxiliary braking force to the front wheel braking mechanism 17 when the rear wheel braking mechanism 18 is actuated, and a part of a rear wheel assist mechanism 19b supplying auxiliary braking force to the rear wheel braking mechanism 18 when the front wheel braking mechanism 17 is actuated.

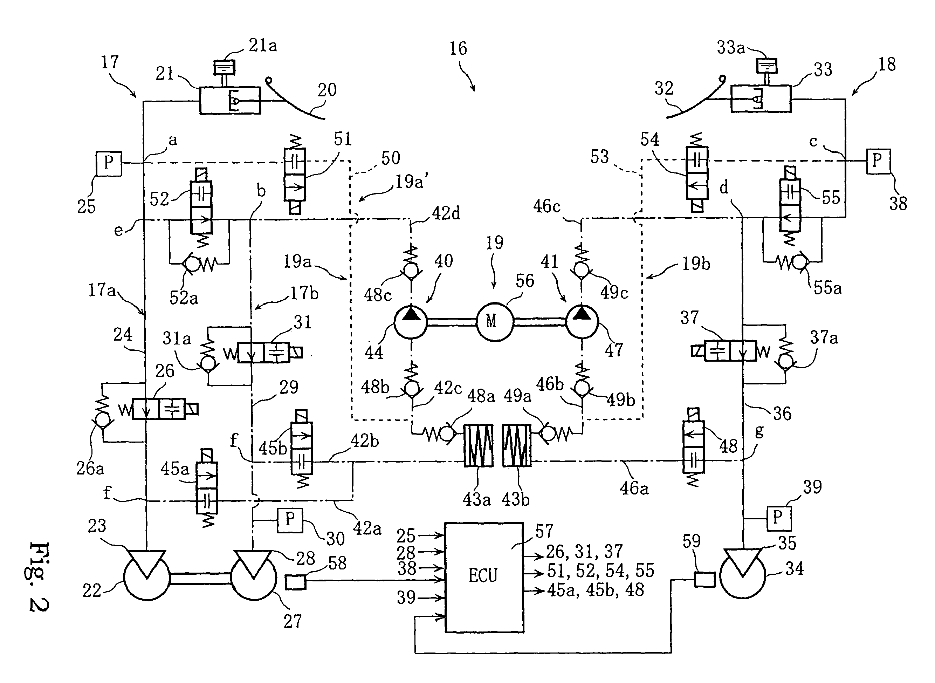

The front wheel braking mechanism 17 includes a first braking mechanism 17a and a second braking mechanism 17b. The first braking mechanism 17a has a front master cylinder 21 coupled to a front brake lever (front operating member) 20, a first brake disk 22 fixed to one side of the front wheel 6, a first caliper 23 attached to the first brake disk 22, and a first hydraulic passage 24 (see a solid line of Fig. 2) establishing communication and connection between the first caliper 23 and the front master cylinder 21. Numeral number 21a designates a front reserve tank for supplying hydraulic oil to the front master cylinder 21.

A first pressure sensor 25 and a non-exciting open type first on-off valve 26 are provided on the way of the first hydraulic passage 24. Numeral number 26a designates a relief valve relieving pressure to the front master cylinder 21 side when the pressure difference between the first caliper 23 side and the front master cylinder 21 side is a set value or more.

The second braking mechanism 17b has a second brake disk 27 fixed to the other side of the front wheel 6, a second caliper 28 attached to the second brake disk 27, and a second hydraulic passage 29 (see a dotted line of Fig. 2) establishing communication and connection between the second caliper 28 and a point e on the way of the first hydraulic passage 24.

A second pressure sensor 30 and a non-exciting open type second on-off valve 31 are provided on the way of the second hydraulic passage 29. Numeral number 31a designates a relief valve relieving pressure to the front master cylinder 21 side when the pressure difference between the second caliper 28 side and the front master cylinder 21 side is a set value or more.

The first caliper 23 and the second caliper 28 have a constitution in which a piston is arranged so as to be freely moved in a cylinder and the piston is brought into contact with a brake pad. When hydraulic pressure is applied to the piston, the piston brings the brake pad in press contact with the brake disk, thereby causing braking force to be generated.

The rear wheel braking mechanism 18 has a rear master cylinder 33 coupled to a brake pedal (rear operating member) 32, a rear brake disk 34 fixed to one side of the rear wheel 9, a rear caliper 35 attached to the rear brake disk 34, a rear hydraulic passage 36 (see a solid line of Fig. 2) establishing communication and connection between the rear caliper 35 and the rear master cylinder 33. Numeral number 33a designates a rear reserve tank for supplying hydraulic oil to the rear master cylinder 33.

A non-exciting open type third on-off valve 37 is provided on the way of the rear hydraulic passage 36. An upper pressure sensor 38 and a lower pressure sensor 39 are respectively provided on the upstream and downstream sides of the third on-off valve 37. Numeral number 37a designates a relief valve relieving pressure to the rear master cylinder 33 side when the pressure difference between the rear caliper 35 side and the rear master cylinder 33 side is a set value or more.

The ABS mechanism 19 has a front wheel ABS mechanism 40 and a rear wheel ABS mechanism 41. Furthermore, the ABS mechanism 19 has a front wheel speed sensor 58 detecting the rotating speed of the front wheel 6, and a rear wheel speed sensor 59 detecting the rotating speed of the rear wheel 9. This ABS mechanism 19 relieves the hydraulic pressure applied to the caliper to be actuated so as to avoid the wheel from being locked when a deceleration calculated from the detection values of both the speed sensors exceeds a predetermined value, which will be described below.

The front wheel ABS mechanism 40 has the following constitution: communication and connection are established between points f, f between on-off valves 26, 31 of the first and second hydraulic passages 24, 29 and the calipers 23, 28 and a front storage tank 43a via relieving passages 42a, 42b; the front storage tank 43a is connected to an suction port of a front pump 44 via a suction passage 42c; and the discharge port of the front pump 44 is connected to a point b on the upstream side of the second on-off valve 31 of the second hydraulic passage 29 via a discharge passage 42d (see a dotted line of Fig. 2). First and second non-exciting close type relieving valves 45a, 45b are provided in the first and second relieving passages 42a, 42b. Numeral numbers 48a, 48b and 48c designate one-way valves for preventing reverse flow.

Similarly, the rear wheel ABS mechanism 41 has the following constitution: communication and connection are established between a point g between an on-off valve 37 of the rear hydraulic passage 36 and the caliper 35 and a rear storage tank 43b via a rear relieving passage 46a; the rear storage tank 43b is connected to a suction port of a rear pump 47 via a suction passage 46b; and the discharge port of the rear pump 47 is connected to a point d on the upstream of the rear on-off valve 37 of the rear hydraulic passage 36 via a discharge passage 46c (see a dotted line of Fig. 2). A non-exciting close type rear relieving valve 48 is provided in the rear relieving passage 46a. Numeral numbers 49a, 49b and 49c designate one-way valves for preventing reverse flow. The front pump 44 and the rear pump 47 are driven by a common electric motor 56.

Furthermore, the front wheel assist mechanism 19a has the following constitution: communication and connection are established between a point a on the way of the first hydraulic passage 24, consequently a front reserve tank 21a and the suction side of a front pump 44 via a complement passage 50 (see a dashed line of Fig. 2); a fourth non-exciting close type on-off valve 51 is provided in the complement passage 50; and furthermore, a fifth non-exciting open type on-off valve (second braking mechanism on-off valve) 52 is provided on further the upstream side than the connecting point b of the second hydraulic passage 29 and discharge passage 42d. An assist passage 19a' is constituted by the complement passage 50, the suction passage 42c, the discharge passage 42d and the second hydraulic passage 29. Numeral number 52a designates a relief valve relieving pressure to the point b side when the pressure difference between the point e and the point b is a predetermined value or more.

Similarly, the rear wheel assist mechanism 19b has the following constitution: communication and connection are established between a portion c on the way of the rear hydraulic passage 36, consequently a rear reserve tank 33a and the suction side of the rear pump 47 via a complement passage 53; a sixth non-exciting close type on-off valve 54 is provided in the complement passage 53; furthermore, a seventh non-exciting open type on-off valve 55 is provided on further the upstream side than the connecting point d between the rear hydraulic passage 36 and the discharge passage 46c.

Numeral number 57 designates an ECU controlling the opening/closing operation of each of the on-off valves and relieving valves. The ECU 57, to which the detection pressures of the pressure sensors 25, 30, 38 and 39 are input, outputs a start/ stop signal to the electric motor 56, and outputs an opening/closing control signal to each of the on-off valves 26, 31, 37, 51, 52, 54 and 55 and the relieving valves 45a, 45b. Specifically, each of the on-off valves is controlled so that the first braking mechanism 17a is actuated only when the brake lever 20 is operated, and so that the second braking mechanism 17b is actuated only when the brake lever 20 is operated in a case where no assist action is performed, and is actuated by only the assist action in a case where the assist action is performed.

The operation of the braking apparatus will be described.

The apparatus enables various kinds of braking auxiliary operations.
(1) When a rider performs pedaling operation to a brake pedal 32, braking force according to pedaling amount is supplied to the rear wheel 9, and auxiliary braking force is supplied to the front wheel 6. Specifically, each of the on-off valves and relieving valves, which is not energized in normal traveling where no braking action is performed, is in an on-off state shown in Fig. 2. When the pedaling operation is performed to the brake pedal 32 in this normal traveling, the hydraulic pressure generated in the rear master cylinder 33 is supplied to the rear caliper 35 via the rear hydraulic passage 36, and the seventh and third on-off valves 55, 37, and the rear wheel 9 is braked by the braking force according to the pedaling amount of the brake pedal 32.

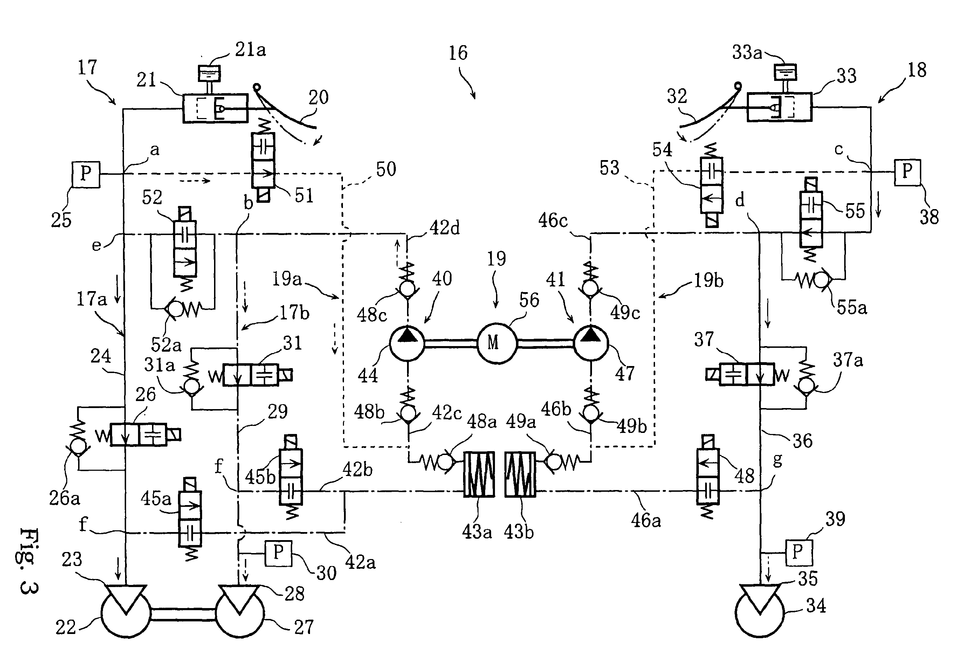

When the detection value of the upper pressure sensor 38 exceeds a previously set threshold value in the pedaling operation of the brake pedal 32, the motor 56 starts to drive the front pump 44 and the rear pump 47 and to energize the fourth and fifth on-off valves 51, 52. Thereby, the fourth on-off valve 51 is opened, and the fifth on-off valve 52 is closed (see Fig. 3).

Therefore, the hydraulic oil of the front reserve tank 21a is sucked in the front pump 44 via the complement passage 50 and the on-off valve 51, and is boosted in the front pump 44. The hydraulic oil is supplied to the second caliper 28 via the second hydraulic passage 29 and the second on-off valve 31, and the front wheel 6 is braked by the auxiliary braking force. Since the rear side sixth on-off valve 54 is closed at this time, the auxiliary braking force is not generated in the rear wheel assist mechanism 19b.

When the grip operation of the front brake lever 20 is performed by the rider in a case where the auxiliary braking force is supplied to the front wheel 6, the hydraulic pressure generated by the front master cylinder 21 is supplied to the first caliper 23 via the first hydraulic passage 24, and the braking force of the front wheel 6 increases according to the operation amount of the front brake lever 20.

(2) When the rider performs the grip operation of the front brake lever 20, the braking force according to the operation amount is supplied to the front wheel 6, and the auxiliary braking force is supplied to the rear wheel 9.

Specifically, when the grip operation of the front brake lever 20 is performed, the hydraulic pressure generated in the front master cylinder 21 is supplied to the first caliper 23 via the first hydraulic passage 24, and is supplied to the second caliper 28 via the second hydraulic passage 29. The front wheel 6 is braked by the braking force according to the operation amount of the front brake lever 20.

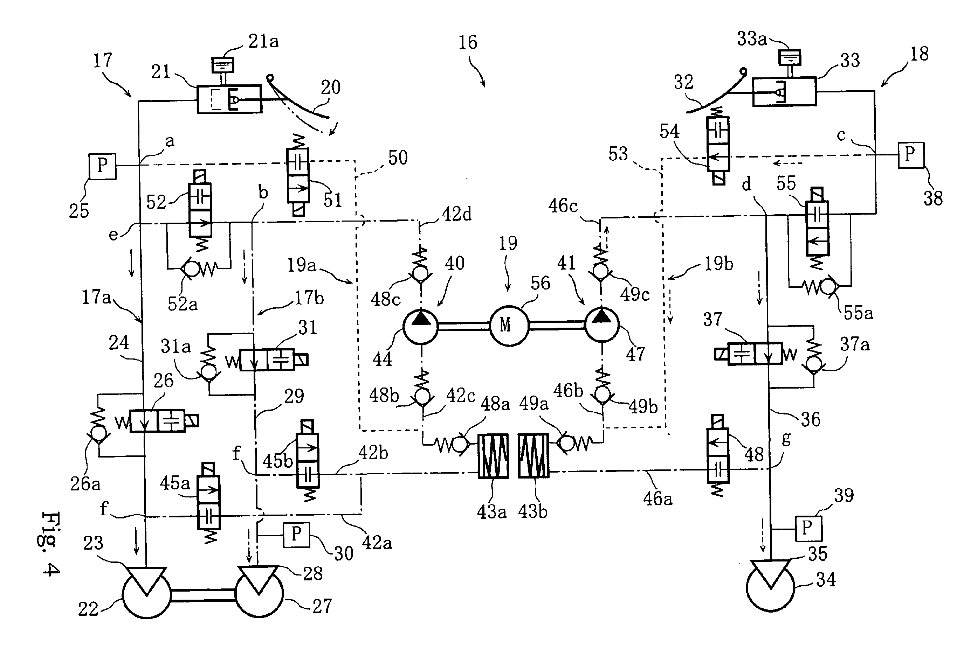

When the detection value of the pressure sensor 25 exceeds a previously set threshold value, the motor 56 starts to drive the front pump 44 and the rear pump 47 and to energize the sixth and seventh on-off valves 54, 55. Thereby, the sixth on-off valve 54 is opened, and the seventh on-off valve 55 is closed (see Fig. 4).

Therefore, the hydraulic oil of the rear reserve tank 33a is sucked in the rear pump 47 via the complement passage 53 and the sixth on-off valve 54, and is boosted in the rear pump 47. The hydraulic oil is supplied to the rear caliper 35 via the rear hydraulic passage 36 and the third on-off valve 37, and the rear wheel 9 is braked by the auxiliary braking force. Since the front side fourth on-off valve 51 is closed in this case, the auxiliary braking force is not generated in the front wheel assist mechanism 19a.

(3) When the pedaling operation of the brake pedal 32 is performed, the auxiliary braking force may be supplied also to the rear wheel 9 side by further opening the sixth on-off valve 54 in Fig. 3, in addition to supplying the auxiliary braking force to the front wheel 6 side. In addition, the auxiliary braking force can be supplied to only the rear wheel 9.

Furthermore, when the grip operation of the front brake lever 20 is performed, the auxiliary braking force may be supplied also to the front wheel 6 side by opening the fourth on-off valve 51 in Fig. 4, in addition to supplying the auxiliary force to the rear wheel 9. In addition, the auxiliary braking force can be supplied to only the front wheel 6.

The ABS mechanism 19 is actuated as follows. For example, the brake pedal 32 is pedaled, and thereby the rotating speed of the rear wheel 9 is detected by the rear wheel speed sensor 59. When the deceleration calculated from the detection rotating speed is larger than a previously set threshold value, it is judged that the rear wheel 9 is locked, and the motor 56 starts to drive the front and rear pumps 44, 47 and to open the rear relieving valve 48. The hydraulic oil in the rear hydraulic passage 36 flows into the rear storage tank 43b to reduce the pressure applied to the rear caliper 35 to release the lock state. Then, the rear relieving valve 48 is closed, and the hydraulic pressure is supplied to the rear caliper 35. This operation is repeated. The case where the front wheel 6 side is locked is also the same.

As described above, the braking apparatus has the following constitution: the front wheel braking mechanism 17 is provided with the first braking mechanism 17a and the second braking mechanism 17b; the first braking mechanism 17a is constituted so as to be actuated only when the front brake lever 20 is operated; the second braking mechanism 17b is actuated only when the front brake lever 20 is operated in the case where no assist action caused by the front wheel assist mechanism 19a is performed, and is actuated by only the assist action when the assist action is performed. Thereby, the braking feeling of the front wheel 6 can be enhanced.

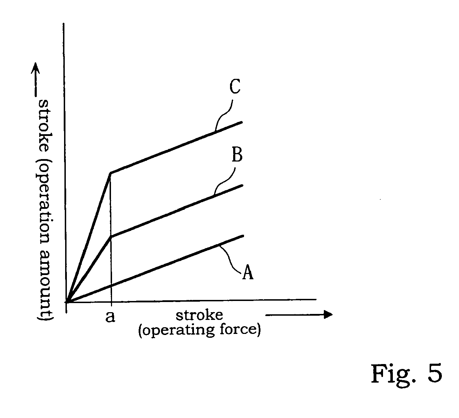

That is, when the grip operation of the front brake lever 20 is performed while the auxiliary braking force is supplied to the front wheel 6 by performing the pedaling operation to the brake pedal 32 in the case where the first braking mechanism 17a is not provided, the operating force required for the operation increases linearly while the operation amount (stroke) of the brake lever 20 increases not much as shown by a characteristic line A in Fig. 5. Therefore, it is considered that the impression that the operation of the brake lever 20 is hard (heavy) is applied. On the other hand, when the assist mechanism itself is not provided at all, the stroke largely increases until the operating force reaches the point a, and the operating force then increases as shown by a characteristic line C in Fig. 5. Thereby, the impression that the operation of the brake lever 20 is soft (light) is applied.

Since the front wheel braking mechanism 17 is constituted by the first braking mechanism 17a actuated by only the operation of the brake lever 20 and the second braking mechanism 17b actuated by the assist action, the operation feeling of the braking apparatus is located in the middle of the characteristic lines A and C as shown by a characteristic line B in Fig. 5, and thereby the operation feeling can be improved.

Herein, since a rear wheel load decreases in braking in the case of the motorcycle, the rear wheel 9 is easily locked as compared with the front wheel 6. Since the auxiliary braking force is supplied to the front wheel 6 in braking the rear wheel 9, the braking force is easily secured as compared with the case where the auxiliary braking force is supplied to the rear wheel. The front wheel braking mechanism 17 is constituted by the first and second braking mechanisms 17a, 17b. The auxiliary braking force is not supplied to the first braking mechanism 17a, and the auxiliary braking force is supplied to only the second braking mechanism 17b. Thereby, since the operation in the operation start of the brake lever 20 is soft, and is then hard, the operation feeling can be improved. Since the manual operation of the front brake lever 20 is performed, the front brake lever 20 is sensitive to the operating force-stroke characteristic, and the present invention is significantly applied to the front wheel braking mechanism 17.

The first braking mechanism 17a has the following constitution: the communication and the connection are established between the front master cylinder 21 generating the hydraulic pressure when the front brake lever 20 is operated and the first caliper 23 brought in press contact with the front disk plate 22 via the first liquid pressure passage 24. Thereby, the braking force according to the operation amount of the front brake lever 20 can be applied to the front wheel 6 by the simple constitution.

The second braking mechanism 17b has the following constitution: the communication and the connection are established between the front master cylinder 21 and the second caliper 28 brought in press contact with the front disk plate 27 via the second liquid pressure passage; the on-off valve 52 is provided in the second hydraulic passage. The front wheel assist mechanism 19a has the following constitution: the communication and the connection are established between the reserve tank 21a of the master cylinder 21 and the second caliper 28 via the assist passage 19a'; the liquid pressure-generating pump 44 is provided in the assist passage; and the on-off valve 51 is provided on the suction side of the pump 44. Thereby, by the opening/closing control of the on-off valves 51, 52, the front wheel 6 can be braked by the operating the front brake lever 20 in the case of no assist action and the front wheel 6 can be braked by the assist action in the case of the assist action.

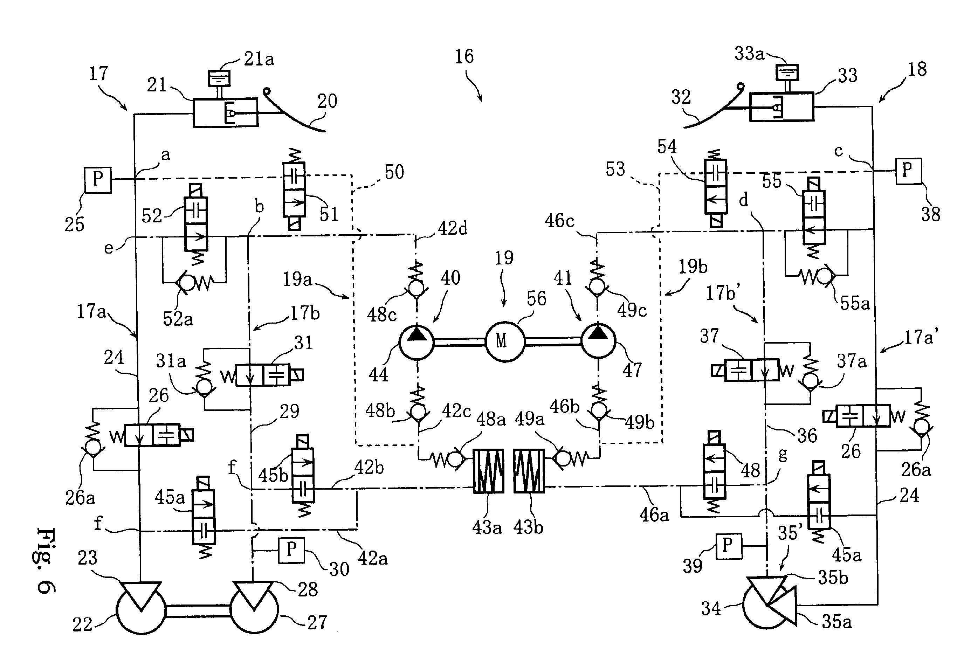

In the embodiment, the front wheel braking mechanism 17 is constituted by providing the first and second braking mechanisms. However, the rear wheel braking mechanism 18 may be constituted by providing the first and second braking mechanisms. Furthermore, as shown in Fig. 6, both the front wheel braking mechanism 17 and the rear wheel braking mechanism 18 may be provided with the first and second braking mechanisms. In this case, since the rear wheel is usually provided with only one brake disk constitutionally, a caliper 35' is provided with a pair of independent pistons 35a, 35b. A first braking mechanism 17a' is connected to the piston 35a, and a second braking mechanism 17b' is connected to the piston 35b.

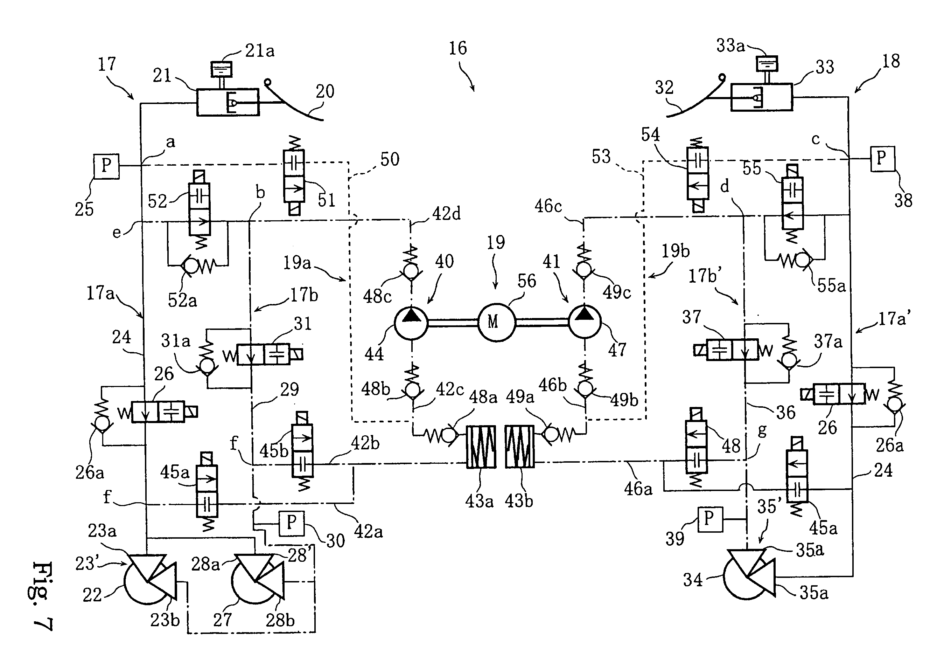

Furthermore, as shown in Fig. 7, calipers 23', 28' of the disk plates 22, 27 of the front wheel 6 can be provided with a pair of independent pistons 23a, 23b, 28a, 28b. The first braking mechanism 17a' can be connected to the pistons 23a, 28a, and the second braking mechanism 17b' can be also connected to the pistons 23b, 28b.

The embodiment describes the case where the first and second braking mechanisms are provided and the second braking mechanism is constituted so as to be actuated by only the assist action when the assist action is performed. However, when the braking force (specifically, the hydraulic pressure according to the pressure sensor 25) caused by the input from the operating member is larger than the braking force (specifically, the hydraulic pressure detected by the pressure sensor 30) caused by the assist action, the second braking mechanism may be constituted so as to be actuated by the assist action and the operating member. This constitution enables the braking action to which the intention of the rider is further reflected.

### Description of the Reference Numerals

1: motorcycle (straddle-type vehicle)
16: braking apparatus
17: front wheel braking mechanism
17a: first braking mechanism
17b: second braking mechanism
18: rear wheel braking mechanism
19a, 19b: front wheel and rear wheel assist mechanisms
19a': assist passage
20: front brake lever (front operating member)
21: front master cylinder
22, 27: first and second disk plates
23, 28: first and second calipers
24: first liquid pressure passage
29: second liquid pressure passage
32: brake pedal (rear operating member)
52: fifth on-off valve (second braking mechanism on-off valve)
2 1 a: reserve tank
44: front pump (liquid pressure-generating pump)
34: common brake disk
35a, 35b: first and second pistons
35': common caliper
19: ABS mechanism
51: fourth on-off valve (suction side on-off valve)
b: connecting point of second liquid pressure passage and assist passage
e: connecting point of second liquid pressure passage and first liquid pressure passage

## Claims

1. A braking apparatus (16) comprising:
a front wheel braking mechanism (17) braking a front wheel (6) in response to operation of a front operating member (20);
a rear wheel braking mechanism (18) braking a rear wheel (9) in response to operation of a rear operating member (32); and
an assist mechanism (19a, 19b) assisting braking action caused by at least one of the front wheel braking mechanism (17) or the rear wheel braking mechanism (18),
wherein at least one of the front wheel braking mechanism (17) or the rear wheel braking mechanism (18) includes a first braking mechanism (17a) and a second braking mechanism (17b);
the first braking mechanism (17a) is actuated only when the front operating member (20) or the rear operating member (32) is operated; and
the second braking mechanism (17b) is actuated only when the front operating member (20) or the rear operating member (32) is operated in a case where no assist action is performed by the assist mechanism (19a, 19b), and is actuated by the assist action in a case where the assist action is performed,
**characterized in that**
the front wheel braking mechanism (17) includes the first braking mechanism (17a) and the second braking mechanism (17b);
the first braking mechanism (17a) is actuated only when the front operating member (20) is operated; and
the second braking mechanism (17b) is actuated only when the front operating member (20) is operated in a case where no assist action is performed by the assist mechanism (19a, 19b), and is actuated by only the assist action in a case where the assist action is performed,
wherein the first braking mechanism (17a) includes a front master cylinder (21) generating a liquid pressure when the front operating member (20) is operated, a front disk plate (22, 27) fixed to the front wheel (6), a first caliper (23') brought in press contact with the front disk plate (22, 27), and a first liquid pressure passage (24) connecting the first caliper (23') to the front master cylinder (21);
the second braking mechanism (17b) includes the front master cylinder (21), the front disk plate (22, 27) fixed to the front wheel (6), a second caliper (28') brought in press contact with the front disk plate (22, 27), a second liquid pressure passage (29) connecting the second caliper(28') to the front master cylinder (21), and a second braking mechanism on-off valve (52) provided between a connecting point (b) of the second liquid pressure passage (29) and an assist passage (19a') of the assist mechanism (19a) and a connecting point (e) of the second liquid pressure passage (29) and first liquid pressure passage (24);
the assist mechanism (19a) includes the assist passage (19a') connecting a reserve tank (21 a) of the front master cylinder (21) to the second caliper (28'), a liquid pressure-generating pump (44) provided in the assist passage (19a'), and a suction side on-off valve (51) provided on a pump suction side of the assist passage (19a'); the suction side on-off valve (51) is opened when the assist mechanism (19a) performs the assist action, and is closed when the assist mechanism (19a) performs no assist action;
the first braking mechanism (17a) supplies the liquid pressure generated by operating the front operating member (20) to the first caliper (23'); and
the second braking mechanism on-off valve (52) is opened when no assist action is performed by the assist mechanism (19a), and is closed when the assist action is performed,
wherein the first and second braking mechanisms (17a, 17b) include a common brake disk (22,27) and a common caliper (23;28) having first and second pistons (23,28a;23b,28b).

2. The braking apparatus according to claim 1, wherein the hydraulic generating pump (44) of the assist mechanism (19a) is used in common with a hydraulic generating pump of an ABS mechanism for avoiding the front wheel (6) or the rear wheel (9) from being locked.

3. The braking apparatus according to any one of the preceding claims, wherein the front wheel braking mechanism (17) is provided with the second braking mechanism (17b), which is actuated by the assist action and input to the front operating member (20) when braking force caused by operating the front operating member (20) is larger than braking force caused by the assist action in a case of being actuated by the assist action caused by the rear wheel braking mechanism (18).

4. A straddle-type vehicle (1) comprising the braking apparatus (16) according to any one of the preceding claims.

## Patentansprüche

1. Eine Bremsvorrichtung (16), die folgende Merkmale aufweist:
einen Vorderradbremsmechanismus (17), der ansprechend auf eine Betätigung eines vorderen Betätigungsbauglieds (20) ein Vorderrad (6) bremst;
einen Hinterradbremsmechanismus (18), der ansprechend auf eine Betätigung eines hinteren Betätigungsbauglieds (32) ein Hinterrad (9) bremst; und
einen Unterstützungsmechanismus (19a, 19b), der eine Bremsaktion unterstützt, die durch zumindest entweder den Vorderradbremsmechanismus (17) oder den Hinterradbremsmechanismus (18) verursacht wird,
wobei zumindest entweder der Vorderradbremsmechanismus (17) oder der Hinterradbremsmechanismus (18) einen ersten Bremsmechanismus (17a) und einen zweiten Bremsmechanismus (17b) umfasst;
wobei der erste Bremsmechanismus (17a) nur ausgelöst wird, wenn das vordere Betätigungsbauglied (20) oder das hintere Betätigungsbauglied (32) betätigt wird; und
der zweite Bremsmechanismus (17b) nur ausgelöst wird, wenn das vordere Betätigungsbauglied (20) oder das hintere Betätigungsbauglied (32) betätigt wird in einem Fall, wo durch den Unterstützungsmechanismus (19a, 19b) keine Unterstützungsaktion durchgeführt wird, und nur durch die Unterstützungsaktion ausgelöst wird in einem Fall, wo die Unterstützungsaktion durchgeführt wird,
**dadurch gekennzeichnet, dass**
der Vorderradbremsmechanismus (17) den ersten Bremsmechanismus (17a) und den zweiten Bremsmechanismus (17b) umfasst;
der erste Bremsmechanismus (17a) nur ausgelöst wird, wenn das vordere Betätigungsbauglied (20) betätigt wird; und
der zweite Bremsmechanismus (17b) nur ausgelöst wird, wenn das vordere Betätigungsbauglied (20) betätigt wird in einem Fall, wo durch den Unterstützungsmechanismus (19a, 19b) keine Unterstützungsaktion durchgeführt wird, und nur durch die Unterstützungsaktion ausgelöst wird in einem Fall, wo die Unterstützungsaktion durchgeführt wird,
wobei der erste Bremsmechanismus (17a) einen vorderen Hauptzylinder (21) umfasst, der einen Flüssigkeitsdruck erzeugt, wenn das vordere Betätigungsbauglied (20) betätigt wird, eine vordere Scheibenplatte (22, 27), die an dem Vorderrad (6) befestigt ist, einen ersten Bremssattel (23'), der in Druckkontakt mit der vorderen Scheibenplatte (22, 27) gebracht wird, und einen ersten Flüssigkeitsdruckdurchgang (24), der den ersten Bremssattel (23') mit dem vorderen Hauptzylinder (21) verbindet;
der zweite Bremsmechanismus (17b) den vorderen Hauptzylinder (21) umfasst, die vordere Scheibenplatte (22, 27), die an dem Vorderrad (6) befestigt ist, einen zweiten Bremssattel (28'), der in Druckkontakt mit der vorderen Scheibenplatte (22, 27) gebracht wird, einen zweiten Flüssigkeitsdruckdurchgang (29), der den zweiten Bremssattel (28') mit dem vorderen Hauptzylinder (21) verbindet, und ein zweites Bremsmechanismus-Ein/Aus-Ventil (52), das zwischen einem Verbindungspunkt (b) des zweiten Flüssigkeitsdruckdurchgangs (29) und eines Unterstützungsdurchgangs (19a') des Unterstützungsmechanismus (19a), und einem Verbindungspunkt (e) des zweiten Flüssigkeitsdruckdurchgangs (29) und eines ersten Flüssigkeitsdruckdurchgangs (24) vorgesehen ist;
der Unterstützungsmechanismus (19a) den Unterstützungsdurchgang (19a') umfasst, der einen Reservetank (21 a) des vorderen Hauptzylinders (21) mit dem zweiten Bremssattel (28') verbindet, eine Flüssigkeitsdruckerzeugungspumpe (44), die in dem Unterstützungsdurchgang (19a') vorgesehen ist, und ein SaugseitenEin/Aus-Ventil (51), das auf einer Pumpensaugseite des Unterstützungsdurchgangs (19a') vorgesehen ist; wobei das Saugseiten-Ein/Aus-Ventil (51) geöffnet ist, wenn der Unterstützungsmechanismus (19a) die Unterstützungsaktion durchführt, und geschlossen ist, wenn der Unterstützungsmechanismus (19a) keine Unterstützungsaktion durchführt;
wobei der erste Bremsmechanismus (17a) den Flüssigkeitsdruck, der durch Betätigen des vorderen Betätigungsbauglieds (20) erzeugt wird, an den ersten Bremssattel (23') liefert; und
das zweite Bremsmechanismus-Ein/Aus-Ventil (52) geöffnet ist, wenn durch den Unterstützungsmechanismus (19a) keine Unterstützungsaktion durchgeführt wird, und geschlossen ist, wenn die Unterstützungsaktion durchgeführt wird,
wobei der erste und der zweite Bremsmechanismus (17a, 17b) eine gemeinsame Bremsscheibe (22, 27) und einen gemeinsamen Bremssattel (23; 28) mit einem ersten und einem zweiten Kolben (23, 28a; 23b, 28b) umfassen.

2. Die Bremsvorrichtung gemäß Anspruch 1, bei der die Hydraulikgeneratorpumpe (44) des Unterstützungsmechanismus (19a) zusammen mit einer Hydraulikgeneratorpumpe eines ABS-Mechanismus verwendet wird, um zu verhindern, dass das Vorderrad (6) oder das Hinterrad (9) blockieren.

3. Die Bremsvorrichtung gemäß einem der vorhergehenden Ansprüche, bei der der Vorderradbremsmechanismus (17) mit dem zweiten Bremsmechanismus (17b) versehen ist, der durch die Unterstützungsaktion ausgelöst wird und in das vordere Betätigungsbauglied (20) eingegeben wird, wenn eine Bremskraft, die durch Betätigen des vorderen Betätigungsbauglieds (20) verursacht wird, größer ist als eine Bremskraft, die durch die Unterstützungsaktion verursacht wird, falls dieselbe durch die Unterstützungsaktion ausgelöst wird, die durch den Hinterradbremsmechanismus (18) verursacht wird.

4. Ein Grätsch-Typ-Fahrzeug (1), das die Bremsvorrichtung (16) gemäß einem der vorhergehenden Ansprüche aufweist.

## Revendications

1. Appareil de freinage (16), comprenant:
un mécanisme de freinage de roue avant (17) freinant une roue avant (6) en réaction au fonctionnement d'un élément d'actionnement avant (20);
un mécanisme de freinage de roue arrière (18) freinant une roue arrière (9) en réaction au fonctionnement d'un élément d'actionnement arrière (32); et
un mécanisme d'assistance (19a, 19b) assistant l'action de freinage provoquée par au moins l'un parmi le mécanisme de freinage de roue avant (17) ou le mécanisme de freinage de roue arrière (18),
dans lequel au moins l'un parmi le mécanisme de freinage de roue avant (17) ou le mécanisme de freinage de roue arrière (18) comporte un premier mécanisme de freinage (17a) et un deuxième mécanisme de freinage (1 7b);
le premier mécanisme de freinage (17a) est actionné uniquement lorsque l'élément d'actionnement avant (20) ou l'élément d'actionnement arrière (32) est actionné; et
le deuxième mécanisme de freinage (17b) est actionné uniquement lorsque l'élément d'actionnement avant (20) ou l'élément d'actionnement arrière (32) est actionné au cas où aucune action d'assistance n'est effectuée par le mécanisme d'assistance (19a, 19b), et est actionné par l'action d'assistance au cas où l'action d'assistance est effectuée,
**caractérisé par le fait que**
le mécanisme de freinage de roue avant (17) comporte le premier mécanisme de freinage (17a) et le deuxième mécanisme de freinage (17b);
le premier mécanisme de freinage (17a) est actionné uniquement lorsque l'élément d'actionnement avant (20) est actionné; et
le deuxième mécanisme de freinage (17b) est actionné uniquement lorsque l'élément d'actionnement avant (20) est actionné au cas où aucune action d'assistance n'est effectuée par le mécanisme d'assistance (19a, 19b), et est actionné par uniquement l'action d'assistance au cas où l'action d'assistance est effectuée,
dans lequel le premier mécanisme de freinage (17a) comporte un cylindre principal avant (21) générant une pression de liquide lorsque l'élément d'actionnement avant (20) est actionné, une plaque de disque avant (22, 27) fixée à la roue avant (6), un premier étrier (23') amené en contact par pression avec la plaque de disque avant (22, 27), et un premier passage de pression de liquide (24) connectant le premier étrier (23') au cylindre principal avant (21);
le deuxième mécanisme de freinage (17b) comporte un cylindre principal avant (21), la plaque de disque avant (22, 27) fixée à la roue avant (6), un deuxième étrier (28') amené en contact par pression avec la plaque de disque avant (22, 27), un deuxième passage de pression de liquide (29) connectant le deuxième étrier (28') au cylindre principal avant (21), et une soupape d'arrêt de deuxième mécanisme de freinage (52) prévue entre un point de connexion (b) du deuxième passage de pression de liquide (29) et un passage d'assistance (19a') du mécanisme d'assistance (19a) et un point de connexion (E) du deuxième passage de pression de liquide (29) et du premier passage de pression de liquide (24);
le mécanisme d'assistance (19a) comporte le passage d'assistance (19a') connectant un réservoir de réserve (21a) du cylindre principal avant (21) au deuxième étrier (28'), une pompe de génération de pression de liquide (44) prévue dans le passage d'assistance (19a'), et une soupape d'arrêt du côté de succion (51) prévue d'un côté de succion de pompe du passage d'assistance (19a'); la soupape d'arrêt du côté de succion (51) est ouverte lorsque le mécanisme d'assistance (19a) effectue l'action d'assistance, et est fermée lorsque le mécanisme d'assistance (19a) n'effectue pas l'action d'assistance;
le premier mécanisme de freinage (17a) alimente la pression de liquide générée par le fonctionnement de l'élément d'actionnement avant (20) vers le premier étrier (23'); et
la soupape d'arrêt de deuxième mécanisme de freinage (52) est ouverte lorsqu'aucune action d'assistance n'est effectuée par le mécanisme d'assistance (19a), et est fermée lorsque l'action d'assistance est effectuée,
dans lequel les premier et deuxième mécanismes de freinage (17a, 17b) comportent un disque de frein commun (22, 27) et un étrier commun (23, 28) présentant des premier et deuxième pistons (23, 28a; 23b, 28b).

2. Dispositif de freinage selon la revendication 1, dans lequel la pompe de génération hydraulique (44) du mécanisme d'assistance (19a) est utilisée en commun avec une pompe de génération hydraulique d'un mécanisme d'ABS pour éviter que la roue avant (6) ou la roue arrière (9) ne se bloquent.

3. Dispositif de freinage selon l'une quelconque des revendications précédentes, dans lequel le mécanisme de freinage de roue avant (17) est pourvu du deuxième mécanisme de freinage (17b) qui est actionné par l'action d'assistance et entré dans l'élément d'actionnement avant (20) lorsque la force de freinage provoquée par l'actionnement de l'élément d'actionnement avant (20) est plus grande que la force de freinage provoquée par l'action d'assistance en cas d'actionnement par l'action d'assistance provoquée par le mécanisme de freinage de roue arrière (18).

4. Véhicule de type à enfourcher (1) comprenant l'appareil de freinage (16) selon l'une quelconque des revendications précédentes.
